# EUROPÄISCHE PATENTSCHRIFT

(11) **EP 0 393 225 B1**
(45) Veröffentlichungstag und Bekanntmachung des Hinweises auf die Patenterteilung: **02.02.1994**
(21) Anmeldenummer: 89107153.2
(22) Anmeldetag: 20.04.1989
(51) Int. Cl.: G01S 7/52

(54) **Ultraschall-Detektion mit quer zur Fahrtrichtung des Fahrzeugs gerichteter Ultraschallstrahlung**
Ultrasonic detection with an ultrasonic beam directed transversely to a vehicle's direction of movement
Détection ultrasonique pour véhicule à faisceau ultrasonique dirigé transversalement à la direction de conduite

(43) Veröffentlichungstag der Anmeldung: 24.10.1990
(73) Patentinhaber: SIEMENS AKTIENGESELLSCHAFT, 80333 München (DE)
(72) Erfinder: Mágori, Valentin, Dipl.-Phys., D-8000 München 90 (DE)

(56) Entgegenhaltungen:
- EP-A- 0 308 899
- EP-A- 0 308 931
- WO-A-89/05243
- DE-A- 3 115 321
- US-A- 4 722 547
- PATENT ABSTRACTS OF JAPAN, vol. 7, no. 29 (M-191)[1174], 5. Februar 1983;& JP-A-57 182 544 (NIPPON DENSO K.K.) 10-11-1982

## Beschreibung

Die vorliegende Erfindung bezieht sich auf Maßnahmen für eine von einem Fahrzeug aus in im wesentlichen quer zur Fahrtrichtung des fahrenden Fahrzeugs erfolgende Ultraschall- Detektion, z.B. mit im wesentlichen auf die Fahrbahnoberfläche gerichteter Ultraschallstrahlung.

Mit der Anwendung von Ultraschall, nämlich durch Ultraschall-Abstandsmessung, ist es möglich, von einem auf einer Straße fahrenden Fahrzeug aus die augenblickliche Fahrbahnwelligkeit und dgl. zu detektieren bzw. zu messen. Es wird jeweils der Abstand zur Fahrbahnoberfläche überwacht. In der US-Patentschrift US-A-4 722 547 wird ein US-Sensorsystem beschrieben, das die Tauch bzw. Roll-Bewegungen eines Fahrzeugs beobachtet. Die Sensoren werden an den gegenüberliegenden Enden oder an den gegenüberliegenden Seiten des Fahrzeugs montiert. Jeder Sensor sendet US-Wellen aus und empfängt die von der Fahrbahn reflektierten Wellen. Mittels Zeitmessung wird der Abstand zwischen Fahrzeug und Straße gemessen. Dabei tritt aber ein Problem auf, nämlich das Verwehen des ausgesandten Ultraschalls durch den Fahrtwind, der sich aus der Bewegung des Fahrzeugs ergibt. Insbesondere bei hohen Geschwindigkeiten des Fahrzeugs macht sich diese Strahlverwehung des Ultraschalls besonders störend bemerkbar.

Aufgabe der vorliegenden Erfindung ist es, Maßnahmen anzugeben, mit denen derartige Strahlverwehung durch den unvermeidlichen Fahrtwind unwirksam gemacht werden kann, insbesondere die Auswertung der Ultraschall-Detektion geschwindigkeitsunabhängig wird.

Diese Aufgabe wird gemäß Patentanspruch 1 gelöst und weitere Ausgestaltungen der Erfindung gehen aus den Unteransprüchen hervor.

Die vorliegende Erfindung beruht auf der Überlegung, daß die Auswirkung einer Strahlverwehung entsprechend dem oben erörterten Problem dadurch beseitigt werden kann, daß man für Aussenden und Empfang Ultraschall-Wandler verwendet, die bezüglich eines derartigen Strahlverwehens durch den Fahrtwind weitgehend unempfindlich sind. Es wurde gefunden, daß es dazu nicht notwendig ist, besondere neue Ultraschall-Wandler zu entwickeln, sondern daß sich für diesen Zweck Ultraschall-Wandler vorteilhaft verwenden lassen, die für an sich ganz anderen Zweck in spezieller Weise ausgebildet sind. Gemäß der Erfindung läßt sich das Problem dadurch lösen, daß man Ultraschall-Wandler mit astigmatischer Schallkeule verwendet. Solche astigmatische Wandler sind aus der DE-OS 37 32 412, welche der EP-A-0 308 931 entspricht und der DE-OS 37 32 410, welche der EP-A-0 308 899 entspricht, bekannt. Diese Wandler zeichnen sich dadurch aus, daß sie in einer zur schallaussendenden bzw. schallempfangenden Fläche des Wandlers senkrechten Ebene eine wesentlich breitere Schallkeule haben, als die Breite dieser Schallkeule in derjenigen Ebene ist, die senkrecht zur vorgenannten Ebene steht. Beide Ebenen schneiden sich in der auf der aussendenden Wandlerfläche senkrecht stehenden Achse. Da solche astigmatischen Wandler jedoch aus dem Stand der Technik genügend bekannt sind, bedarf es hier keiner weiteren Beschreibung von Einzelheiten solcher Wandler. Insbesondere gehen aus dem Stand der Technik Kontruktions- und Herstellungsverfahren solcher astigmatischer Wandler vor. Aus der DE-OS 34 09 789 sind entsprechend verwendbare Wandler bekannt, die nicht-rotationssymmetrische Schallcharakteristik haben.

Gemäß einem Merkmal der Erfindung werden solche astigmatischen Wandler mit der Hauptstrahlrichtung, das ist in der Regel die auf der Wandlerfläche senkrecht stehenden Achse, am Fahrzeug so angebracht, daß diese Richtung vom Fahrzeug aus zur Straßenoberfläche zeigt. Das heißt, daß die Hauptstrahlrichtung des Wandlers im wesentlichen senkrecht zur Fahrtrichtung des Fahrzeugs und im wesentlichen senkrecht zur Straßenoberfläche gerichtet ist. Erfindungsgemäß wird der vorgesehene Wandler mit astigmatischer Schallkeule so ausgerichtet angeordnet, daß er mit der voranstehend angegebenen Strahlrichtung in der Fahrtrichtung eine große Breite seiner Schallkeule besitzt. Geringe Breite der Schallkeule, d.h. hohe Richtwirkung, hat dieser astigmatische Schallwandler dann in der zur Fahrtrichtung senkrechten Ebene.

Mit anderen Worten heißt dies, daß der Schallwandler mit astigmatischer Schallkeule, d.h. mit in zwei aufeinander senkrecht stehenden Ebenen stark unterschiedlichen Halbwertswinkeln seiner Schallkeule so eingebaut ist, daß die Fahrtrichtung in die Ebene mit dem breiten Abstrahlwinkel fällt.

Durch diese erfindungsgemäße Maßnahme wird erreicht, daß der mit Ultraschall durchgeführte Meßbetrieb unempfindlich ist gegen den Fahrtwind. Andererseits ist mit einem solchen astigmatischen Wandler ein Richtgewinn zu erreichen, nämlich gegenüber einem solchen Schallwandler, der mit Rücksicht auf den Fahrtwind eine als relativ breit ausgewählte, rotationssymmetrische Schallkeule hat. Das heißt bei der Erfindung wird durch die in der senkrechten Ebene vorliegende starke Schallkonzentration ein entsprechend höherer Wirkungsgrad erreicht.

Weitere Ausgestaltungen der Erfindung sind, daß man bei voneinander getrennten Sende- und Empfangswandlern diese derart am Fahrzeug anbringt, daß die dem astigmatischen Effekt entsprechenden breiten Schallkeulen miteinander nur überlappen, d.h. sich nicht vollständig decken, jedoch die schmalen Schallkeulen der zur Fahrtrichtung senkrechten Ebene sich decken. Das Maß der Deckungsabweichung wird so gewählt, daß der Fahrtwindeinfluß zusätzlich ausgemittelt wird, d.h. daß ein Vorhalten der optimalen Aussenderichtung (innerhalb der Breite der Schallkeule) des Sendewandlers vorliegt.

Von besonderem Vorteil lassen sich für die Erfindung Biegewandler nach der DE-OS 37 32 412 (gleichbedeutend mit EP-A-0 308 931) verwenden, die aufgrund von in nur einer Richtung verlaufenden Rillen oder dgl., die sich in der Oberfläche der Wandlermembran befinden, eine stark nicht-rotationssymmetrische Schallkeule besitzen. Ebenfalls mit besonderem Vorteil zu verwenden sind Biegewandler der DE-OS 37 32 410 (gleichbedeutend mit EP-A-0 308 899), die eine Wandlermembran aus einem anisotropen Material besitzen. Derartiges anisotropes Material ist z.B. solches, in das in einer Richtung ausgerichtet verstärkende Fasern eingelagert sind.

Es können auch apodisierte Biegewandler oder Wandler nach der DE-OS 34 09 789 verwendet werden.

Eine Anwendung der Erfindung ist, vom fahrenden Fahrzeug aus vor den Rädern der vorderen (vordersten) Achse, den Zustand der Fahrbahn festzustellen, nämlich ob die Fahrbahn wellig oder glatt ist und/oder ob Schlaglöcher vorausliegen, in die das nachfolgende Rad dann hereinläuft.

Mit solcher Vorauskenntnis der Fahrbahnbeschaffenheit wird vorgesehene Steuerung der Federungs- und Stoßdämpfercharakteristik vorausberechnet und durchgeführt. Zum Beispiel wird bei auftretenden Wellen in einer ansonsten glatten Fahrbahn die Federung und die Stoßdämpfung an diese Fahrbahnbeschaffenheit verändert angepaßt. Damit läßt sich nicht nur der Fahrkomfort für den jeweiligen Augenblick verbessern, sondern auch etwaiges "Schwimmen" des Fahrzeugs wegen ansonsten unnotwendig "weicher" Federung ausschließen.

Für eine solche Anwendung ist der jeweilige Wandler zum Beispiel im Bereich der vorderen Stoßstange am Fahrzeug angebracht, wofür dann auch entsprechender Schutz gegen Verunreinigung des Wandlers, insbesondere durch anhaftenden Schneematsch und dgl., vorzusehen ist.

Die vorliegende Erfindung läßt sich auch zur seitlichen Führung des Fahrzeugs verwenden. Dazu ist der wenigstens eine Ultraschallwandler so am Fahrzeug anzuordnen, daß er mit seiner Strahlung und seinem Echoempfang auf eine Leitstruktur gerichtet ist, die entlang der Fahrbahn vorzugeben ist. Eine solche Leitstruktur kann die bekannte Leitplanke sein. Eine solche Anwendung der Erfindung kann auch dazu dienen, im wesentlichen parallel zur Fahrtrichtung sich erstreckende Fahrbahnschwellen zu erkennen. Auch eine solche Fahrbahnschwelle kann als Leitstruktur, vorzugsweise bei mehrbahnigen Fahrbahnen, dienen.

Für die Anbringung des wenigstens einen Schallwandlers am Fahrzeug eignet sich für die seitlich gerichtete Ultraschalldetektion die Integration des Wandlers in einer seitlichen Begrenzungsleuchte des Fahrzeugs oder im Scheinwerfer desselben. Die Justierung des erfindungsgemäß vorgesehenen Wandlers mit astigmatischer oder äquivalenter Strahlungscharakteristik ist für den Fall der seitlich gerichteten Detektion so zu wählen, daß die Ebene der vergleichsweise breiten Strahlungscharakteristik mit der horizontalen Ebene zusammenfällt, so daß die Strahlungscharakteristik in zur Horizontalebene (und zur Fahrtrichtung) orthogonaler Ebene scharfe Bündelung aufweist. Die Strahlverwehung wird durch die breite Strahlungscharakteristik der Horizontalebene eliminiert.

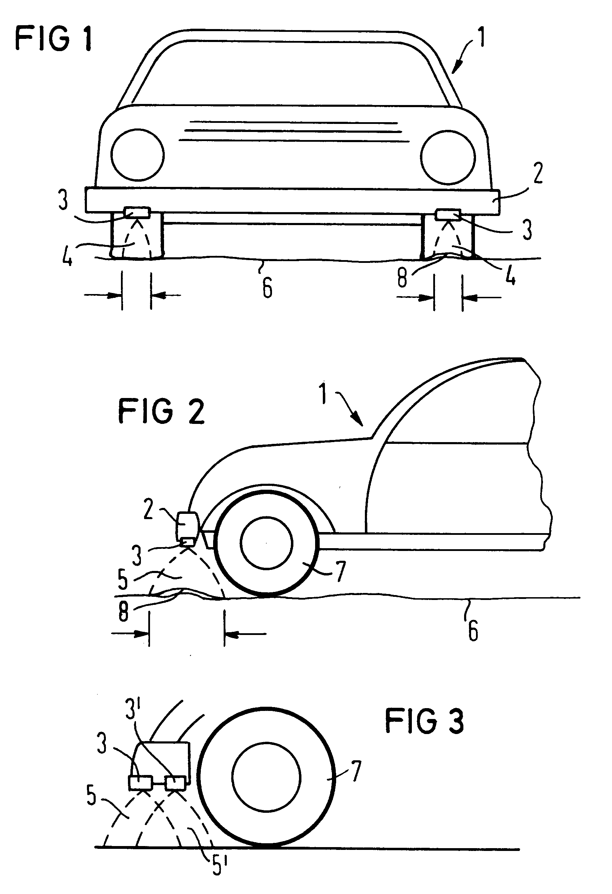

Die beigefügten Figuren 1 und 2 zeigen in Frontansicht und in Seitenansicht ein Kraftfahrzeug 1 mit im Bereich der vorderen Stoßstange 2 angebrachtem, erfindungsgemäß astigmatischem Wandler 3. Mit 4 ist der Querschnitt der schmalen Schallkeule des Wandlers 3 wiedergegeben. Mit 5 ist dementsprechend der breite Querschnitt der insgesamt räumlichen Strahlungskeule bezeichnet. Mit 6 ist die Fahrbahnoberfläche angegeben. Im Erfassungsbereich des Ultraschallstrahls 4/5 befindet sich vor dem linken Vorderrad 7 ein Fahrbahnbuckel 8. Dieser wird detektiert und die Federung und/oder Dämpfung dieses Rades 7 (und gegebenenfalls des nachlaufenden Hinterrades) angepaßt.

Figur 3 zeigt einen Ausschnitt der Figur 2 für eine Ausführung mit zwei Wandlern 3, 3', deren Schallkeulen 5, 5' nicht vollständig deckend ausgerichtet sind, deren Schallkeulen 5, 5' jedoch unter Einschluß des Fahrtwindes für z.B. die mittlere Geschwindigkeit in ihrer Funktion zusammenfallen.

## Patentansprüche

1. Vorrichtung für eine von einem fahrenden Fahrzeug aus quer zur Fahrtrichtung erfolgende Ultraschalldetektion, wobei die Vorrichtung wenigstens einen Ultraschallwandler (3) aufweist,
**gekennzeichnet dadurch,**
daß dieser zur Beseitigung der Wirkung der Strahlverwehung durch den Fahrtwind mit astigmatischer Schallkeule (4/5) vorgesehen ist, wobei der Wandler (3) am Fahrzeug (1) derart ausgerichtet angebracht ist, daß die Ebene des breiteren Anteils (5) der Schallkeule mit derjenigen Ebene zusammenfällt, die durch die augenblickliche Fahrtrichtung und die vorgegebene Detektionsrichtung bestimmt ist.

2. Vorrichtung nach Anspruch 1,
**gekennzeichnet dadurch,**
daß ein einziger Wandler (3) für Senden und für Empfangen vorgesehen ist.

3. Vorrichtung nach Anspruch 1,
**gekennzeichnet dadurch,**
daß für Senden und Empfang je ein astigmatischer Wandler (3,3') vorgesehen ist, die so zueinander justiert angebracht sind, daß sich ihre breiteren Anteile der astigmatischen Schallkeule nicht vollständig decken.

4. Vorrichtung nach Anspruch 1, 2 oder 3,
**gekennzeichnet dadurch,**
daß der oder die Wandler (3, 3') im Stoßstangenbereich (2) des Fahrzeugs (1) angebracht sind.

5. Vorrichtung nach Anspruch 4,
**gekennzeichnet dadurch,**
daß der oder die Wandler (3, 3') vor einem Rad (7) des Fahrzeugs (1) positioniert sind.

6. Vorrichtung nach Anspruch 4,
**gekennzeichnet dadurch,**
daß der oder die Wandler (3, 3') vor Verschmutzung geschützt angebracht sind.

7. Vorrichtung nach einem der Ansprüche 1 bis 6,
**gekennzeichnet dadurch,**
daß der Ultraschall-Strahl auf die Fahrbahnoberfläche (6) gerichtet ist.

8. Vorrichtung nach einem der Ansprüche 1 bis 6,
**gekennzeichnet dadurch,**
daß der Ultraschall-Strahl in Richtung einer seitlichen Leitstruktur gerichtet ist.

9. Vorrichtung nach Anspruch 8,
**gekennzeichnet dadurch,**
daß der wenigstens eine Wandler (3) in einen Scheinwerfer integriert ist.

10. Vorrichtung nach Anspruch 8,
**gekennzeichnet dadurch,**
daß der wenigstens eine Wandler (3) in einer seitlichen Begrenzungsleuchte des Fahrzeugs (1) integriert ist.

## Claims

1. Device for an ultrasonic detection taking place from a moving vehicle transverse with respect to the direction of travel, the device having at least one ultrasonic transducer (3), characterized in that the said transducer (3) is provided with an astigmatic sound lobe (4/5) in order to eliminate the effect of the beam drift as a result of the slipstream, the transducer (3) being attached to the vehicle (1) aligned in such a way that the plane of the broader portion (5) of the sound lobe coincides with that plane which is determined by the instantaneous direction of travel and the predetermined direction of detection.

2. Device according to Claim 1, characterized in that a single transducer (3) is provided for transmitting and for receiving.

3. Device according to Claim 1, characterized in that in each case one astigmatic transducer (3, 3') is provided for transmitting and receiving, which transducers are provided adjusted with respect to one another in such a way that their broader portions of the astigmatic sound lobe are not completely congruent.

4. Device according to Claim 1, 2 or 3, characterized in that the transducer or transducers (3, 3') are attached in the bumper area (2) of the vehicle (1).

5. Device according to Claim 4, characterized in that the transducer or transducers (3, 3') are positioned in front of a wheel (7) of the vehicle (1).

6. Device according to Claim 4, characterized in that the transducer or transducers (3, 3') are attached protected against soiling.

7. Device according to one of Claims 1 to 6, characterized in that the ultrasonic beam is directed onto the surface (6) of the carriageway.

8. Device according to one of Claims 1 to 6, characterized in that the ultrasonic beam is directed in the direction of a lateral guiding structure.

9. Device according to Claim 8, characterized in that the at least one transducer (3) is integrated into a headlamp.

10. Device according to Claim 8, characterized in that the at least one transducer (3) is integrated into a side lamp of the vehicle (1).

## Revendications

1. Dispositif pour une détection d'ultrasons, réalisée à partir d'un véhicule en déplacement, transversalement par rapport à la direction de déplacement, le dispositif comportant au moins un transducteur à ultrasons (3), caractérisé par le fait que ce transducteur est prévu pour éliminer l'action d'un décalage dû au vent de déplacement avec un lobe d'émission acoustique astigmatique (4/5), le transducteur (3) étant monté sur le véhicule (1) en étant aligné de telle sorte que le plan de la partie la plus large (5) du lobe d'émission acoustique coïncide avec le plan qui est déterminé par la direction de déplacement instantanée et par la direction de détection prédéterminée.

2. Dispositif suivant la revendication 1, caractérisé par le fait qu'un seul transducteur (3) est prévu pour l'émission et la réception.

3. Dispositif suivant la revendication 1, caractérisé par le fait que pour l'émission et la réception il est prévu des transducteurs astigmatiques respectifs (3,3'), qui sont montés en étant ajustés réciproquement de telle sorte que les parties les plus larges de leurs lobes acoustiques astigmatiques ne se recouvrent pas.

4. Dispositif suivant la revendication 1, 2 ou 3, caractérisé par le fait que le ou les transducteurs (3,3') sont montés dans la zone (2) du pare-chocs du véhicule (1).

5. Dispositif suivant la revendication 4, caractérisé par le fait que le ou les transducteurs (3,3') sont positionnés devant une roue (7) du véhicule (1).

6. Dispositif suivant la revendication 4, caractérisé par le fait que le ou les transducteurs (3,3') sont montés en étant protégés vis-à-vis d'un salissement.

7. Dispositif suivant l'une des revendications 1 à 6, caractérisé par le fait que le faisceau d'ultrasons est dirigé vers la surface (6) de la chaussée.

8. Dispositif suivant l'une des revendications 1 à 6, caractérisé par le fait que le faisceau d'ultrasons est dirigé en direction d'une structure de guidage latérale.

9. Dispositif suivant la revendication 8, caractérisé par le fait qu'au moins un transducteur (3) est intégré dans un phare.

10. Dispositif suivant la revendication 8, caractérisé par le fait que le ou les transducteurs (3) sont intégrés dans un feu de position latéral du véhicule (1).
